# EUROPEAN PATENT SPECIFICATION

(11) **EP 4 589 750 B1**
(45) Date of publication and mention of the grant of the patent: **29.07.2026**
(21) Application number: 24382054.5
(22) Date of filing: 22.01.2024
(51) Int. Cl.: H01M 50/342, H01M 50/30

(54) **VENTING UNIT AND BATTERY WITH VENTING UNIT**
ENTLÜFTUNGSEINHEIT UND BATTERIE MIT ENTLÜFTUNGSEINHEIT
UNITÉ DE VENTILATION ET BATTERIE AVEC UNITÉ DE VENTILATION

(43) Date of publication of application: 23.07.2025
(73) Proprietor: MANN+HUMMEL GmbH, 71636 Ludwigsburg (DE)
(72) Inventor: GRIECO, Giovanni, 50014 Zaragoza (ES); LORENTE, Sonia, 50006 Zaragoza (ES); MARZAL, Leopoldo, 50019 Zaragoza (ES); GRACIA, Jaime, 50018 Zaragoza (ES)
(74) Representative: Mann + Hummel Intellectual Property

(56) References cited:
- EP-A1- 4 002 571
- CN-A- 110 649 207
- US-A1- 2018 261 814
- US-A1- 2021 320 376
- US-A1- 2023 163 409

## Description

### Technical Field

The invention relates to a venting unit for venting a machinery space, in particular a battery housing, as well as a battery including a venting unit.

### Background Art

WO2021116180A1 discloses a pressure relief device for exercising a pressure relief function for a cell-like cavity enclosed by a battery housing, with a pressure relief cover unit which is inserted into a housing wall, which, when a pressure threshold and/or temperature threshold is exceeded, opens a flow path from the cavity into an outer area of the housing. A reliable function is supported in that the pressure relief cover unit is directly or indirectly connected to a sensor device with at least one sensor element, which is integrated into a pressure relief monitoring and/or into the pressure relief function.

US20230012294A1 discloses a venting unit for a housing that has a base body to be connected fluid-tightly to a rim of a housing opening. The base body has a gas passage opening closed by a membrane that spans areally across the gas passage opening transversely to an axial direction. An actor is operatively connected to the base body and has an emergency venting spike extending axially toward the membrane. The emergency venting spike has a tip or a cutting edge arranged, in a state of rest, at a predetermined distance from a membrane surface of the membrane and can move toward the membrane when the actor is actuated so that tip or cutting edge punctures the membrane. A cover arranged at an outer side of the base body covers the gas passage opening. A fastening mechanism connects cover and base body. The actor has an actuation element for releasing the fastening mechanism. A further venting unit is known from CN110649207A, according to the preamble of claim 1.

### Summary

It is an object of the invention to provide an improved venting unit for venting a machinery space, in particular a battery housing.

Another object is to provide a battery including an improved venting unit.

According to an aspect of the invention the object is achieved by a venting unit for venting a machinery space, in particular a battery housing, the venting unit including a base body mountable in a substantially fluid tight manner to an opening of the machinery space, the base body including a fluid permeable passageway for venting and an opening section configured to close the fluid permeable passageway and being attached to the base body in a substantially fluid tight manner. The venting unit further includes an actuator, in particular a mechatronic device, attached to the base body, and at least one sensor coupled to the actuator and configured to sense at least one harmful gas in the machinery space. The actuator includes an actuation element configured to open the opening section when the actuator receives, from the at least one sensor, a signal indicating a presence of an amount of at least one harmful gas above a desired threshold.

According to a further aspect of the invention the another object is achieved by a battery including the venting unit.

Advantageous embodiments are described in the dependent claims, the description and the drawings.

The proposed venting unit includes an actuator that, activated by a signal of at least one harmful gas being present above a given threshold inside the machinery space, activates a movement resulting in an opening section to release the harmful gas.

Due to one embodiment the opening section may just be opened by perforating a given membrane thus releasing the gas. In this case the opening section may remain open for further venting the machinery space.

Due to another embodiment the opening section may open for releasing the gas from the machinery space. Once the gas is released the opening section may close again for further operation. Thus the opening section is configured for a reversible venting operation.

The degassing system is an active venting system and can be customized in contrast to most current venting systems that are passive systems and are operated mechanically for opening a passageway of the machinery space.

The proposed active venting system based on monitoring at least one harmful gas with at least one sensor located in the machinery space, in particular battery, or outside thus advantageously increases the safety for passenger of cars where the battery is built in. Additionally, the battery health may also be increased by effective venting and in particular reclosing the battery housing.

According to a favorable embodiment of the venting unit, the opening section may include a membrane closing the fluid permeable passageway and spanned across the fluid permeable passageway, in particular transversely to the axial direction of the base body. Yet, other orientations of the membrane are also possible for favorable venting of the machinery space. In particular, the membrane may be a semipermeable membrane configured to enable passage of gaseous media from an environment into the machinery space and in reverse, and to prevent passage of liquid media and/or solids. By this way a normal venting for balancing different atmospheric pressures between the environment and the electronics housing the venting unit is mounted to may be ensured without opening the valve closure plate. Thus, intrusion of dust particles, e.g., during venting, may be avoided.

The semipermeable membrane may be provided in the form of a microporous film, including in particular a fluoropolymer, in particular a polytetrafluoroethylene.

According to a favorable embodiment, the venting unit may further include at least one cutting device connected to the actuation element and configured to perforate the membrane when the actuator receives the signal from the at least one sensor. Thus, the opening section may instantly be opened for pressure relief and venting of harmful gases from the machinery space. Because of spatial rupture of the membrane, in particular at several points of the membrane, an effective cross section for venting the gases may be achieved.

According to a favorable embodiment, the opening section may include a plate connected to the actuation element and movable in an axial direction, the plate being configured to be sealed to an opening of the base body , and the plate may include a frame, to which the membrane is fixed fluid-tightly. Such a plate may effectively be coupled to the activation element of the actuator and be reliably moved from sealing the venting unit for venting the gases and after venting reseal the passageway again.

According to a favorable embodiment of the venting unit, the actuation element may be configured to move the plate to open and to close the opening of the base body when the actuator receives the signal from the at least one sensor. Thus, the opening section may be configured for a reversible venting operation. The opening section may be reclosed after effective venting of the gases. In particular, if the cause for the venting has vanished this may be an advantageous operation mode.

According to a favorable embodiment, the venting unit may further include a pretensioned spring element interposed between the plate and the actuator. The base body may further include a sealing seat, the pretensioned spring element may be configured to press the plate against the sealing seat, and the actuation element may be further configured to release the plate from the sealing seat when the actuator receives the signal from the at least one sensor. Advantageously, the actuator only needs to be activated when opening of the opening section for venting is required whereas the opening section is automatically reclosed when the activation signal for the actuator is cancelled.

According to a favorable embodiment, the venting unit may further include a spike connected to the actuation element, the spike including a tip pointing towards the opening section and for perforating the membrane. Such a spike advantageously may serve for emergency venting purposes, e.g. in cases where pressure inside the machinery space increases very rapidly and the membrane is moved outwards towards the spike. The membrane then may be perforated by the spike leading to rupturing the membrane and opening a spatial venting cross section.

According to a favorable embodiment of the venting unit, the at least one sensor may be attached to the base body and may be further configured to sense through the opening of the machinery space, when the base body is mounted in an intended mounting position at the machinery space. In particular, the at least one sensor may protrude from a rear side of the base body and/or may be connectable from a front side of the base body. This enables a compact design of the venting unit with the necessary sensor and easy mounting e.g. at a battery housing as no further mounting space or equipment is necessary for fixing the sensor.

According to a favorable embodiment of the venting unit, the at least one sensor may be further configured to sense either one or both of a pressure difference between the machinery space and an outside environment and a temperature inside the machinery space. Additionally to sensing harmful gases, pressure rises as well as temperature rises may cause a necessity to vent the machinery space and open the opening section.

Further, a battery including the venting unit is proposed.

The proposed battery, in particular a high voltage battery for electric vehicles, includes a venting unit for at least venting the battery housing in case of e.g. a thermal event inside the battery housing. Effective and fast venting of the battery housing in such a case is an essential safety issue.

The venting unit includes an actuator that, activated by a signal of at least one harmful gas being present above a given threshold inside the battery housing, activates a movement resulting in an opening section to release the harmful gas.

Due to one embodiment the opening section may just be opened by perforating a given membrane thus releasing the gas. In this case the opening section may remain open for further venting the battery housing.

Due to another embodiment the opening section may open for releasing the gas from the battery housing. Once the gas is released the opening section may close again for further operation. Thus the opening section is configured for a reversible venting operation.

The degassing system is an active venting system and can be customized in contrast to most current venting systems that are passive systems and are operated mechanically for opening a passageway of the machinery space.

The active venting system of the proposed battery based on monitoring at least one harmful gas with at least one sensor located in the battery housing or outside thus advantageously increases the safety for passenger of cars where the battery is built in. Additionally, the battery health may also be increased by effective venting and in particular reclosing the battery housing.

### Brief Description of Drawings

The present invention together with the above-mentioned and other objects and advantages may best be understood from the following detailed description of the embodiments, but not restricted to the embodiments.
Figure 1 is a venting unit for venting a machinery space, in particular a battery housing, according to an embodiment of the invention, in an isometric view from a front side.
Figure 2 is the venting unit from a rear side.
Figure 3 is a top view of the venting unit.
Figure 4 is a sectional view of the venting unit.
Figure 5 is the venting unit from the front side in a partly sectional view.
Figure 6 is a venting unit according to a further embodiment of the invention, in an isometric view from a front side.
Figure 7 is the venting unit according to Fig. 6 from a rear side.
Figure 8 is a top view of the venting unit according to Fig. 6.
Figure 9 is a sectional view of the venting unit according to Fig. 6.
Figure 10 is the venting unit according to Fig. 6 from the front side in a partly sectional view.

### Description of Embodiments

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

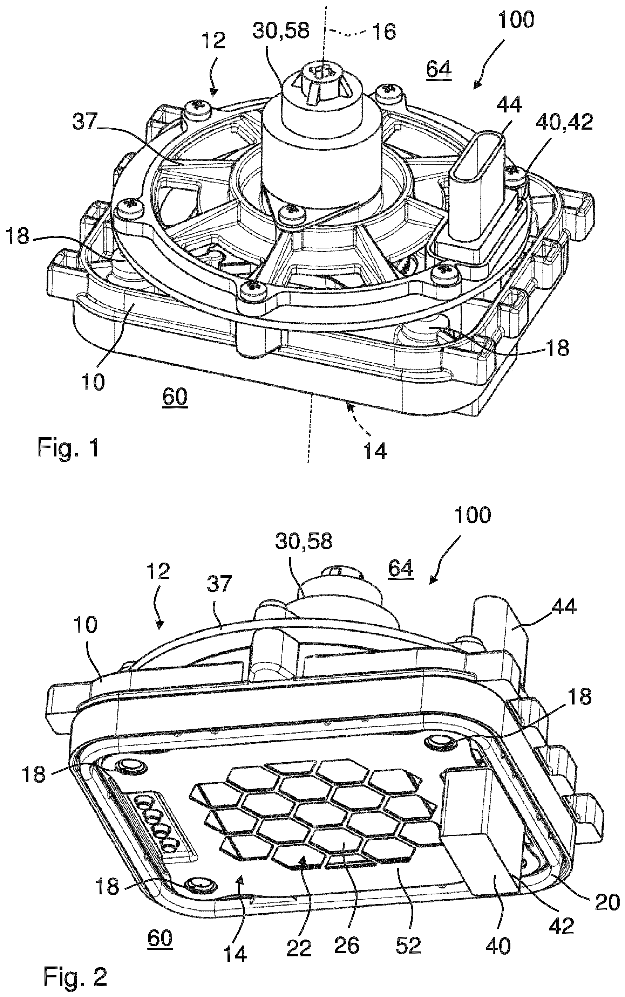

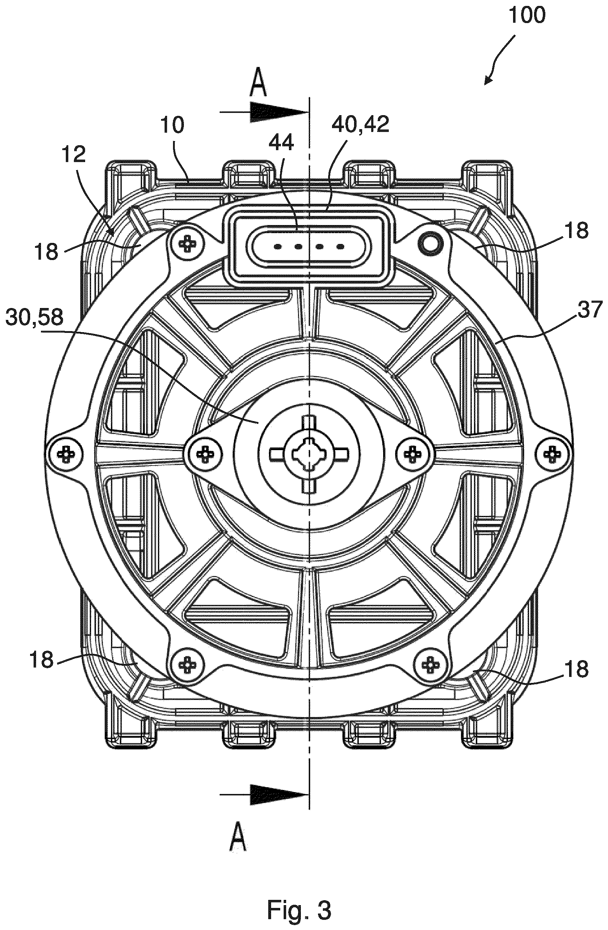

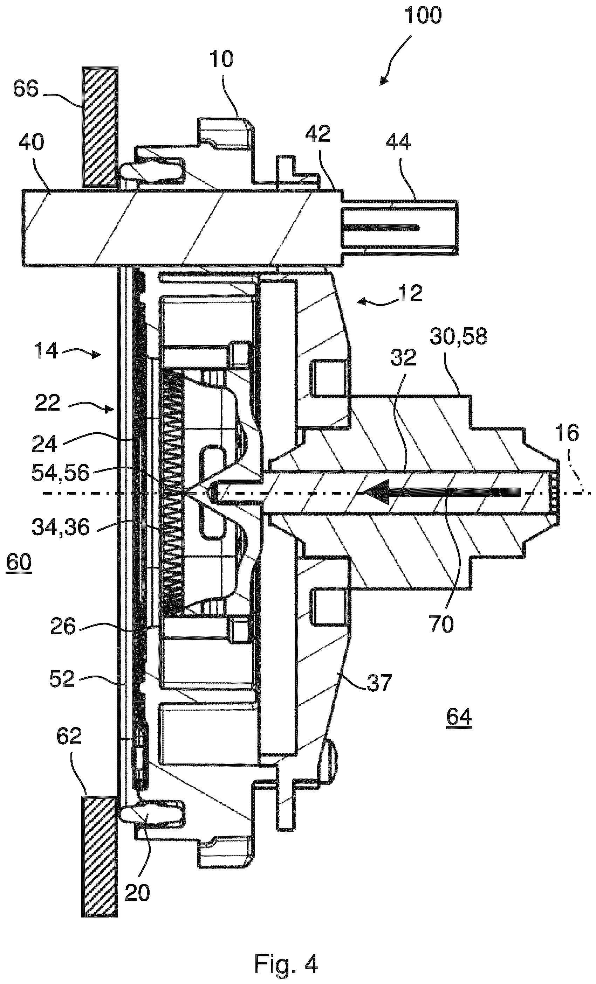

Figure 1 depicts a venting unit 100 for venting a machinery space 60, in particular a battery housing, according to an embodiment of the invention, in an isometric view from a front side 12. Figure 2 depicts the venting unit 100 from a rear side 14, whereas in Figure 3 a top view of the venting unit 100 is shown. In Figure 4 a sectional view of the venting unit 100 is depicted.

The venting unit 100 at least includes a base body 10 with a front side 12 and a rear side 14 along an axial direction 16. The base body 10 includes mounting elements 18 and a sealing element 20 for being mounted with the rear side 14 in a substantially fluid tight manner to an opening 62 of the machinery space 60. The mounting elements 18 may be realized e.g. as holes holding screws. The sealing element 20 is arranged circumferentially at the outer edge of the base body 10.

The mounting situation of the venting unit 100 to the machinery space 60, e.g. a battery housing 66, is shown in Figure 4. The housing 66 with the opening 62 for the venting unit 100 is sketched in a schematic view.

The base body 10 exhibits a fluid permeable passageway 22 for venting. An opening section 24 closes the passageway 22 under normal operating conditions of e.g. the battery. The opening section 24 is attached to the base body 10 in a substantially fluid tight manner. The sealing element 20 of the base body 10 is arranged surrounding the passageway 22, as may be seen from Figure 2.

In the embodiment shown, the opening section 24 includes a membrane 26 closing the passageway 22 and spanned across the passageway 22 transversely to the axial direction 16 of the base body 10. In particular, the membrane 26 may be a semipermeable membrane enabling passage of gaseous media from the environment 64 into the machinery space 60 and in reverse and preventing passage of liquid media and/or solids.

The membrane 26 may be protected at the rear side 14 of the base body 10 by a grille. Thus, mechanical violations of the membrane 26 e.g. during mounting, may be avoided.

The venting unit 100 further includes an actuator 30, in particular a mechatronic device 58 such as an electromagnetic actuator, attached to the base body 10. The actuator 30 is fixed to the base body 10 by a circumferential mounting bracket 37.

The actuator 30 is configured to be activated by a signal of at least one sensor 40 coupled to the actuator 30.

The sensor 40 is configured for sensing at least one harmful gas in the machinery space 60. Despite, the sensor 40 may also be configured for sensing at least one of a pressure difference between the machinery space 60 and the outside environment 64, a temperature inside the machinery space 60. Also, not only one sensor 40 may be implemented, but signals from different sensors 40 sensing the same and/or different physical quantities may be used for proper activation of the actuator 30.

In the embodiment shown there is one sensor 40 attached to the base body 10 sensing through the opening 62 of the machinery space 60, when the base body 10 is mounted in an intended mounting position at the machinery space 60, as may be seen from Figures 2 and 4. For this purpose, the sensor 40 protrudes from the rear side 14 of the base body 10. The sensor 40 is connectable from the front side 12 of the base body 10 via the connector 44. The sensor 40 thus may be connected to some not shown activation unit of the actuator 30, e.g. a control unit in the battery or in the vehicle the battery is mounted to.

In Figure 4 some internal arrangement of the venting unit 100 is to be seen.

The actuator 30 includes an actuation element 32 configured to open the opening section 24 upon receipt of a signal by the actuator 30 from the at least one sensor 40 indicating a presence of an amount of at least one harmful gas above a desired threshold.

The actuation element 32 is shown in Figure 4 in the ground state of the actuator 30, where the actuation element 32 is retracted in the actuator 30 housing. A moving direction 70 is marked by the arrow.

The actuation element 32 is mechanically connected to at a cutting device 34, in particular a circumferential teeth arrangement 36 as shown, for perforating the membrane 26 when the actuator 30 is activated by the signal of the at least one sensor 40.

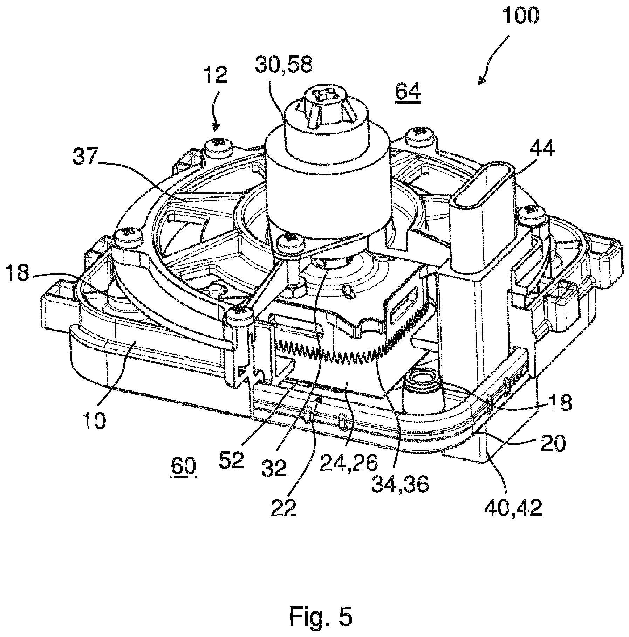

The circumferential teeth arrangement 36 may best be recognized from Figure 5, where the venting unit 100 is depicted from the front side 12 in a partly sectional view. The circumferential teeth arrangement 36 is arranged circumferentially to cut the membrane 26 as the opening section 24 on an outer edge.

If activated the actuation element 32 moves the circumferential teeth arrangement 36 in the moving direction 70 towards the membrane 26. The membrane 26 gets perforated by the teeth, ruptures and the passageway 22 is open for venting.

The actuation element 32 is connected to a spike 54 with a tip 56 pointing towards the opening section 24 for perforating the membrane 26. If pressure inside the battery housing 66 rises the membrane might get bulged in the direction towards the environment 64 with a lower pressure. This means that the membrane 26 touches the tip 56 of the spike 54 which then perforates the membrane 26 for emergency venting.

As may best be seen from Figure 4, the sensor 400 protrudes into the machinery space 60 to a significant extent for sensing harmful gases inside the housing 66. The connector 44 on the front side 12 may easily be connected from the outside.

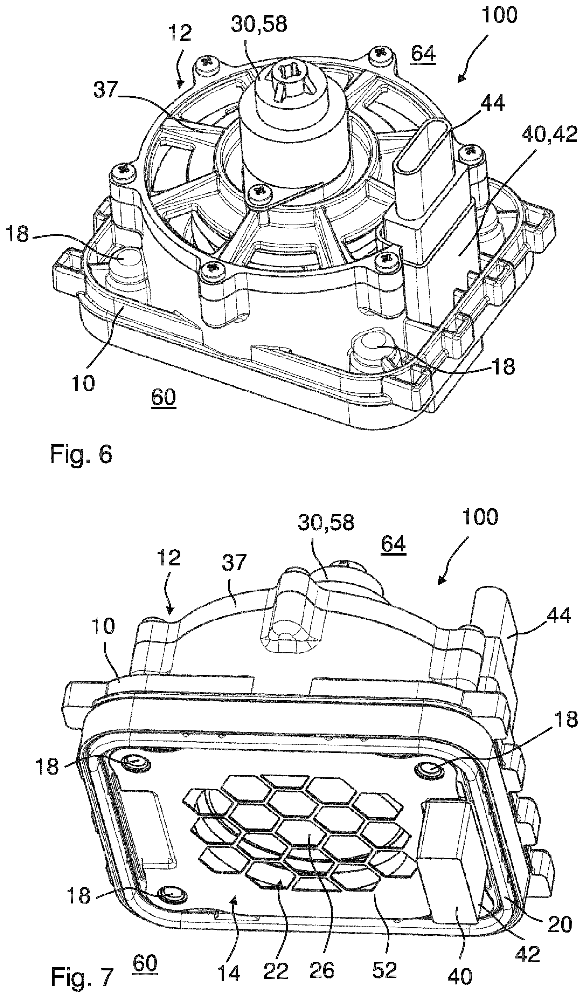

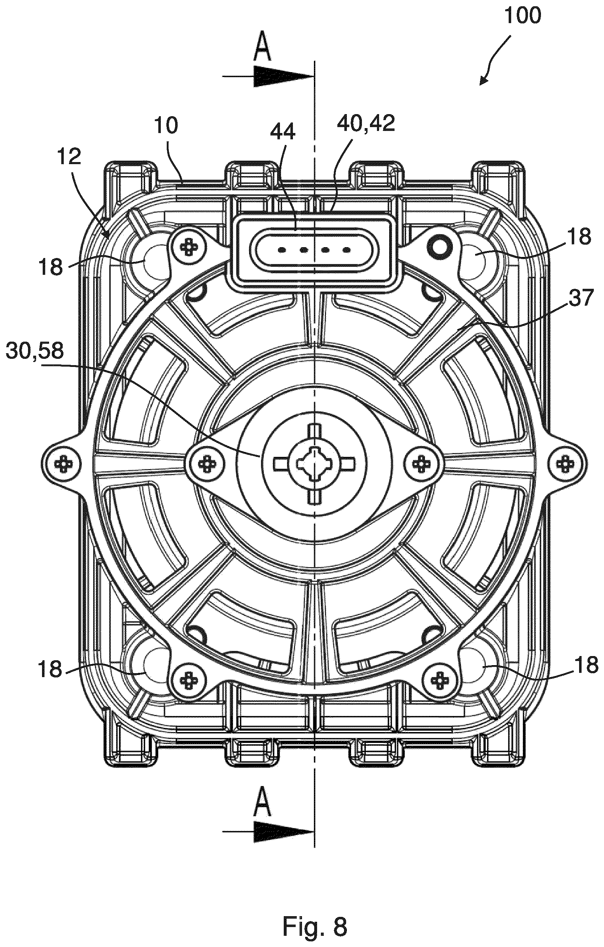

Figure 6 depicts a venting unit 100 according to a further embodiment of the invention, in an isometric view from a front side 12. Figure 7 depicts the venting unit 100 from a rear side 14, whereas in Figure 8 a top view of the venting unit 100 is shown.

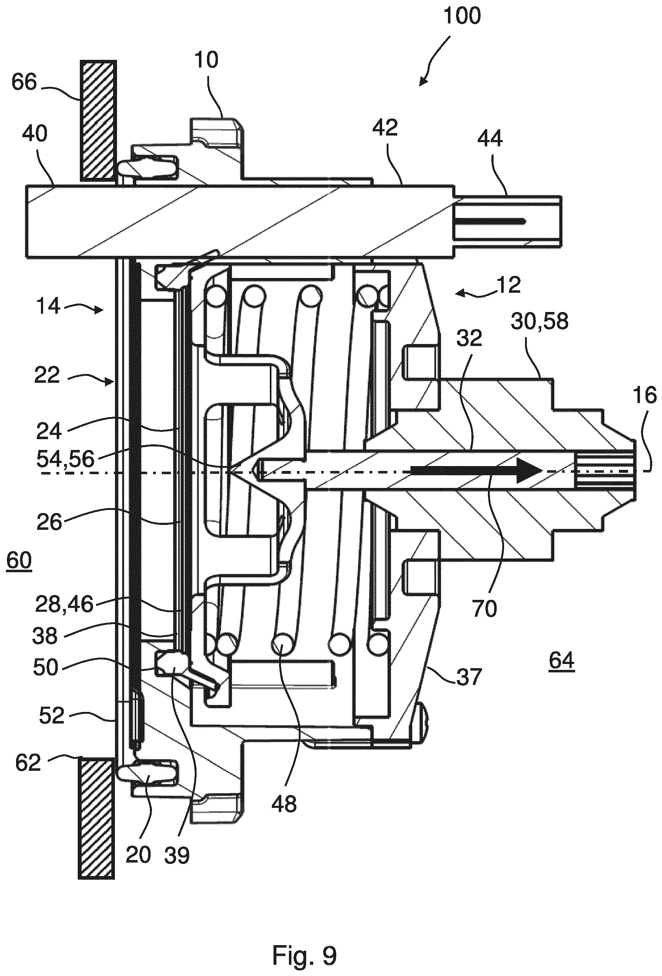

The outer appearance of the venting unit 100 resemble the embodiment shown in the previous Figures 1 to 5. Major differences may be recognized from Figure 9, where a sectional view of the venting unit 100 is depicted.

For this embodiment, the opening section 24 is configured to be opened and/or reclosed, in particular repeatedly, by the actuation element 32 upon receipt of the signal by the actuator 30 from the at least one sensor 40. For this purpose, the opening section 24 is configured as a plate 28 movable in the axial direction 16. The plate 28 is sealed to an opening 38 of the base body 10 by a circumferential sealing element 39. Further, the plate 28 is mechanically connected to the actuation element 32 of the actuator 30.

The plate 28 may be configured as a rigid plate, which closes the opening 38 when the actuator 30 is not activated. The plate 28 as the opening section 24 is pressed against a sealing seat 50 by a pretensioned spring element 48. Upon receipt of the signal by the actuator 30 from the at least one sensor 40 the actuator 30 releases the plate 28 from the sealing seat 50 by retracting the actuation element 32 in the moving direction 70 against the spring element 48. Thus, the passageway 22 is opened for venting gases.

In a further embodiment, the plate 28 may be configured as a frame 46, wherein a membrane 26 is fixed fluid-tightly to the frame 46. In particular, if the membrane 26 is a semipermeable membrane enabling passage of gaseous media from the environment 64 into the machinery space 60 and in reverse and preventing passage of liquid media and/or solids, under normal operating conditions of a battery, the membrane 26 may enable a pressure equalization of the machinery space 60. Yet, when harmful gases are detected or the pressure inside the machinery space 60 rises very steeply, the actuator 30 may be activated and may retreat the actuation element 32 in the moving direction 70 thus opening the opening section 24 for rapid venting of the machinery space 60, e.g. a battery housing.

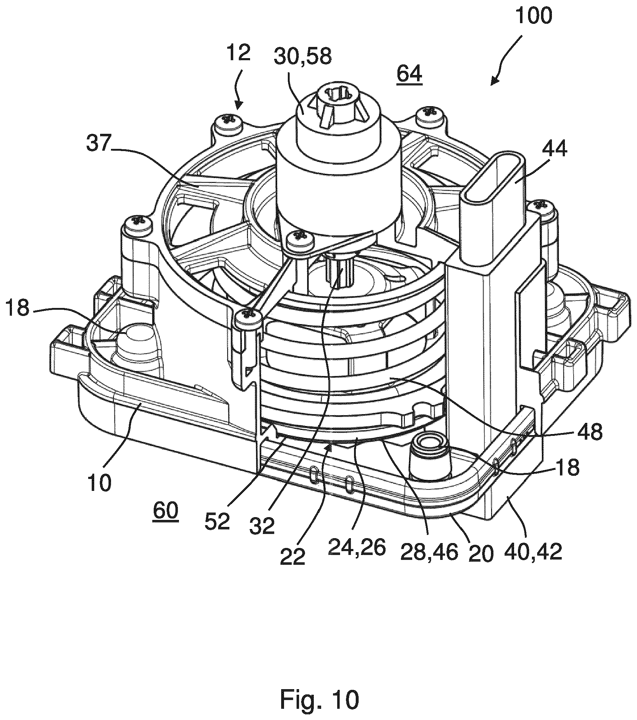

Figure 10 depicts the venting unit 100 from the front side 12 in a partly sectional view. In this view the pretensioned spring element 48 is to be seen, pressing the plate 28 in the closing position to seal the opening 38 of the base body 10.

A battery, in particular a high voltage battery for electric vehicles, may include at least one venting unit 100 according to embodiments of the invention for venting the battery housing, e.g. in a situation where harmful gases are generated inside the battery housing.

The venting unit 100 may include a base body 10 with a front side 12 and a rear side 14 along an axial direction 16, with mounting elements 18 and a sealing element 20 for being mounted with the rear side 14 in a substantially fluid tight manner to an opening 62 of the machinery space 60, having a fluid permeable passageway 22 for venting, and an opening section 24 closing the passageway 22 and being attached to the base body 10 in a substantially fluid tight manner, the sealing element 20 being arranged surrounding the passageway 22. The venting unit 100 may further include an actuator 30 attached to the base body 10 and being configured to be activated by a signal of at least one sensor 40 arranged at the venting unit 100 and/or in the battery housing, wherein the sensor 40 is configured for sensing at least one harmful gas in the machinery space 60. The actuator 30 may include an actuation element 32 configured to open the opening section 24 upon receipt of a signal by the actuator 30 from the at least one sensor 40 indicating a presence of an amount of at least one harmful gas above a desired threshold.

### Reference Signs List

- 10: base body
- 12: front side
- 14: rear side
- 16: axial direction
- 18: mounting element
- 20: sealing element
- 22: passageway
- 24: opening section
- 26: membrane
- 28: plate
- 30: actuator
- 32: actuation element
- 34: cutting device
- 36: teeth arrangement
- 37: mounting bracket
- 38: opening
- 39: sealing element
- 40: sensor
- 42: sensor housing
- 44: connector
- 46: frame
- 48: spring element
- 50: sealing seat
- 52: grille
- 54: emergency spike
- 56: tip
- 58: mechatronic device
- 60: machinery space
- 62: opening
- 64: environment
- 66: housing
- 70: moving direction
- 100: venting unit

## Claims

1. A venting unit (100) for venting a machinery space (60), the venting unit (100) comprising:
a base body (10) mountable in a substantially fluid tight manner to an opening (62) of the machinery space (60), the base body (10) comprising a fluid permeable passageway (22) for venting and an opening section (24) configured to close the fluid permeable passageway (22) and being attached to the base body (10) in a substantially fluid tight manner;
an actuator (30) attached to the base body (10); and
at least one sensor (40) coupled to the actuator (30) and configured to sense at least one harmful gas in the machinery space (60),
wherein the actuator (30) comprises an actuation element (32) configured to open the opening section (24) when the actuator (30) receives, from the at least one sensor (40), a signal indicating a presence of an amount of the at least one harmful gas above a desired threshold,
wherein the opening section (24) comprises a membrane (26) closing the fluid permeable passageway (22) and spanned across the fluid permeable passageway (22),
wherein the membrane (26) is a semipermeable membrane configured to enable passage of gaseous media from an environment (64) into the machinery space (60) and in reverse, and to prevent passage of liquid media and/or solids,
**characterized in that**
the opening section (24) comprises a plate (28) connected to the actuation element (32) and movable in an axial direction (16), the plate (28) being configured to be sealed to an opening (38) of the base body (10), and
that the plate (28) comprises a frame (46), to which the membrane (26) is fixed fluid-tightly.

2. The venting unit according to claim 1, further comprising at least one cutting device (34) connected to the actuation element (32) and configured to perforate the membrane (26) when the actuator (30) receives the signal from the at least one sensor (40).

3. The venting unit according to claim 1, wherein the actuation element (32) is configured to move the plate (28) to open and to close the opening (38) of the base body (10) when the actuator (30) receives the signal from the at least one sensor (40).

4. The venting unit according to any preceding claim, further comprising a pretensioned spring element (48) interposed between the plate (28) and the actuator (30),
wherein the base body (10) further comprises a sealing seat (50),
wherein the pretensioned spring element (48) is configured to press the plate (28) against the sealing seat (50), and
wherein the actuation element (32) is further configured to release the plate (28) from the sealing seat (50) when the actuator (30) receives the signal from the at least one sensor (40).

5. The venting unit according to any one of the claims 2 to 4, further comprising a spike (54) connected to the actuation element (32), the spike (54) comprising a tip (56) pointing towards the opening section (24) and for perforating the membrane (26).

6. The venting unit according to any one of the preceding claims, wherein the at least one sensor (40) is attached to the base body (10) and is further configured to sense through the opening (62) of the machinery space (60) when the base body (10) is mounted in an intended mounting position at the machinery space (60), the at least one sensor (40) protruding from a rear side (14) of the base body (10) and/or being connectable from a front side (12) of the base body (10).

7. The venting unit according to any one of the preceding claims, wherein the at least one sensor (40) is further configured to sense either one or both of a pressure difference between the machinery space (60) and an outside environment (64) and a temperature inside the machinery space (60).

8. A battery comprising the venting unit (100) according to any one of the preceding claims.

## Patentansprüche

1. Entlüftungseinheit (100) zum Entlüften eines Maschinenraums (60), wobei die Entlüftungseinheit (100) umfasst:
einen Grundkörper (10), der im Wesentlichen fluiddicht an einer Öffnung (62) des Maschinenraums (60) anbringbar ist, wobei der Grundkörper (10) einen fluiddurchlässigen Durchgang (22) zur Entlüftung und einen Öffnungsabschnitt (24) umfasst, der dazu ausgebildet ist, den fluiddurchlässigen Durchgang (22) zu verschließen, und der im Wesentlichen fluiddicht am Grundkörper (10) befestigt ist;
einen an dem Grundkörper (10) befestigten Aktuator (30);
und mindestens einen Sensor (40), der mit dem Aktuator (30) gekoppelt und so konfiguriert ist, dass er mindestens ein Schadgas im Maschinenraum (60) erfasst,
wobei der Aktuator (30) ein Betätigungselement (32) umfasst, das so konfiguriert ist, dass es den Öffnungsabschnitt (24) öffnet, wenn der Aktuator (30) von dem mindestens einen Sensor (40) ein Signal empfängt, das ein Vorhandensein einer Menge des mindestens einen Schadgases über einem gewünschten Schwellenwert anzeigt,
wobei der Öffnungsabschnitt (24) eine Membran (26) umfasst, die den fluiddurchlässigen Durchgang (22) verschließt und sich über den fluiddurchlässigen Durchgang (22) erstreckt,
wobei die Membran (26) eine semipermeable Membran ist, die so konfiguriert ist, dass sie den Durchlass gasförmiger Medien aus einer Umgebung (64) in den Maschinenraum (60) und in umgekehrter Richtung ermöglicht und den Durchlass flüssiger Medien und/oder Feststoffe verhindert,
**dadurch gekennzeichnet, dass**
der Öffnungsabschnitt (24) eine mit dem Betätigungselement (32) verbundene und in Achsrichtung (16) bewegliche Platte (28) umfasst, wobei die Platte (28) so konfiguriert ist, dass sie gegen eine Öffnung (38) des Grundkörpers (10) abgedichtet wird, und dass
die Platte (28) einen Rahmen (46) umfasst, an dem die Membran (26) fluiddicht befestigt ist.

2. Entlüftungseinheit nach Anspruch 1, die ferner mindestens eine Schneidvorrichtung (34) umfasst, die mit dem Betätigungselement (32) verbunden und so konfiguriert ist, dass sie die Membran (26) perforiert, wenn der Aktuator (30) das Signal von dem mindestens einen Sensor (40) empfängt.

3. Entlüftungseinheit nach Anspruch 1, wobei das Betätigungselement (32) so konfiguriert ist, dass es die Platte (28) bewegt, um die Öffnung (38) des Grundkörpers (10) zu öffnen und zu schließen, wenn der Aktuator (30) das Signal von dem mindestens einen Sensor (40) empfängt.

4. Entlüftungseinheit nach einem der obigen Ansprüche, ferner umfassend ein vorgespanntes Federelement (48), das zwischen der Platte (28) und dem Aktuator (30) angeordnet ist,
wobei der Grundkörper (10) ferner einen Dichtsitz (50) umfasst,
wobei das vorgespannte Federelement (48) so konfiguriert ist, dass es die Platte (28) gegen den Dichtsitz (50) drückt, und
wobei das Betätigungselement (32) ferner so konfiguriert ist, dass es die Platte (28) vom Dichtsitz (50) freigibt, wenn der Aktuator (30) das Signal von dem mindestens einen Sensor (40) empfängt.

5. Entlüftungseinheit nach einem der Ansprüche 2 bis 4, die ferner einen mit dem Betätigungselement (32) verbundenen Dorn (54) umfasst, wobei der Dorn (54) eine zum Öffnungsabschnitt (24) hin gerichtete Spitze (56) zum Perforieren der Membran (26) aufweist.

6. Entlüftungseinheit nach einem der obigen Ansprüche, wobei der mindestens eine Sensor (40) am Grundkörper (10) angebracht ist und ferner so konfiguriert ist, dass er durch die Öffnung (62) des Maschinenraums (60) hindurch erfasst, wenn der Grundkörper (10) in einer vorgesehenen Montageposition am Maschinenraum (60) montiert ist, wobei der mindestens eine Sensor (40) aus einer Rückseite (14) des Grundkörpers (10) herausragt und/oder von einer Vorderseite (12) des Grundkörpers (10) her anschließbar ist.

7. Entlüftungseinheit nach einem der obigen Ansprüche, wobei der mindestens eine Sensor (40) ferner so konfiguriert ist, dass er eine Druckdifferenz entweder zwischen dem Maschinenraum (60) und der Außenumgebung (64) oder die Temperatur im Inneren des Maschinenraums (60) oder beides erfasst.

8. Batterie, die die Entlüftungseinheit (100) nach einem der obigen Ansprüche umfasst.

## Revendications

1. Unité de ventilation (100) destinée à ventiler un espace de machine (60), l'unité de ventilation (100) comprenant:
un corps de base (10) pouvant être monté de manière sensiblement étanche aux fluides sur une ouverture (62) de l'espace de machine (60), le corps de base (10) comprenant un passage perméable aux fluides (22) destiné à la ventilation et une section d'ouverture (24) configurée pour fermer le passage perméable aux fluides (22) et fixée au corps de base (10) de manière sensiblement étanche aux fluides;
un actionneur (30) attaché au corps de base (10);
et au moins un capteur (40) couplé à l'actionneur (30) et configuré pour détecter au moins un gaz toxique dans l'espace de machine (60),
dans laquelle l'actionneur (30) comprend un élément d'actionnement (32) configuré pour ouvrir la section d'ouverture (24) lorsque l'actionneur (30) reçoit, de la part du capteur (40), au moins au nombre d'un, un signal indiquant une présence d'une quantité du gaz toxique, au moins au nombre d'un, supérieure à un seuil souhaité,
dans laquelle la section d'ouverture (24) comprend une membrane (26) fermant le passage perméable aux fluides (22) et s'étendant across du passage perméable aux fluides (22),
dans laquelle la membrane (26) est une membrane semi-perméable configurée pour permettre le passage de milieux gazeux d'un environnement (64) vers l'espace de machine (60) et inversement, et pour empêcher le passage de milieux liquides et/ou de solides,
**caractérisée en ce que**
la section d'ouverture (24) comprend une plaque (28) reliée à l'élément d'actionnement (32) et mobile dans une direction axiale (16), la plaque (28) étant configurée pour être scellée contre une ouverture (38) du corps de base (10), et **en ce que**
la plaque (28) comprend un cadre (46) sur lequel la membrane (26) est fixée de manière étanche aux fluides.

2. Unité de ventilation selon la revendication 1, comprenant en outre au moins un dispositif de découpe (34) relié à l'élément d'actionnement (32) et configuré pour perforer la membrane (26) lorsque l'actionneur (30) reçoit le signal provenant du capteur (40), au moins au nombre d'un.

3. Unité de ventilation selon la revendication 1, dans laquelle l'élément d'actionnement (32) est configuré pour déplacer la plaque (28) afin d'ouvrir et de fermer l'ouverture (38) du corps de base (10) lorsque l'actionneur (30) reçoit le signal provenant du capteur (40), au moins au nombre d'un.

4. Unité de ventilation selon l'une quelconque des revendications précédentes, comprenant en outre un élément à ressort précontraint (48) interposé entre la plaque (28) et l'actionneur (30),
dans laquelle le corps de base (10) comprend en outre un siège d'étanchéité (50),
dans laquelle l'élément ressort précontraint (48) est configuré pour presser la plaque (28) contre le siège d'étanchéité (50), et
dans laquelle l'élément d'actionnement (32) est en outre configuré pour libérer la plaque (28) du siège d'étanchéité (50) lorsque l'actionneur (30) reçoit le signal provenant du capteur (40), au moins au nombre d'un.

5. Unité de ventilation selon l'une quelconque des revendications 2 à 4, comprenant en outre une pointe (54) reliée à l'élément d'actionnement (32), la pointe (54) comprenant une extrémité (56) dirigée vers la section d'ouverture (24) et destinée à perforer la membrane (26).

6. Unité de ventilation selon l'une quelconque des revendications précédentes, dans laquelle le capteur (40), au moins au nombre d'un, est fixé au corps de base (10) et est en outre configuré pour détecter à travers l'ouverture (62) de l'espace de machine (60) lorsque le corps de base (10) est monté dans une position de montage prévue au niveau de l'espace de machine (60), le capteur (40), au moins au nombre d'un, faisant saillie depuis une face arrière (14) du corps de base (10) et/ou pouvant être raccordé depuis une face avant (12) du corps de base (10).

7. Unité de ventilation selon l'une quelconque des revendications précédentes, dans laquelle le capteur (40), au moins au nombre d'un, est en outre configuré pour détecter soit une différence de pression entre l'espace de machine (60) et un environnement extérieur (64) et une température à l'intérieur de l'espace de machine (60) soit les deux.

8. Une batterie comprenant l'unité de ventilation (100) selon l'une quelconque des revendications précédentes.
